# EUROPEAN PATENT APPLICATION

(11) **EP 2 385 022 A1**
(43) Date of publication of application: **09.11.2011**
(21) Application number: 11164831.7
(22) Date of filing: 04.05.2011
(51) Int. Cl.: C02F 1/66, B01D 19/00, C02F 1/20, B01D 53/52, B01D 3/34

(54) **Removal of hydrogen sulfide from water**

(30) Priority: 07.05.2010 US 776150; 07.05.2010 CA 2703464
(71) Applicant: EnCana Corporation, Calgary, Alberta T2P 2S5 (CA)
(72) Inventor: DeFosse, Grant Todd, Calgary Alberta T2X 2L3 (CA); McCorriston, Lois Louise, Calgary Alberta T2W 4V5 (CA)
(74) Representative: Gaunt, Robert John

(57) **Abstract**

A method of removing hydrogen sulfide from water is provided, comprising providing water containing a first amount of hydrogen sulfide and having a first pH; adding a stripper gas to the water to form a mixture; agitating the mixture; and separating a gaseous portion from the mixture to form a water product, the water product containing a second amount of hydrogen sulfide that is less than the first amount of hydrogen sulfide.

## Description

The present invention relates to methods and systems for removing hydrogen sulfide from water.

### BACKGROUND OF THE INVENTION

Water that contains significant amounts of hydrogen sulfide is commonly referred to as sour water. Sour water can occur from a number of different industrial processes as well as occurring naturally in some water sources, such as wells. Besides the smell and affect on the taste of the water, hydrogen sulfide can cause corrosion and can have a number of environmental and health effects.

For example, it would be desirable to be able to use well water in many drilling and fracturing operations in hydrocarbon formations. However, some well water in certain areas contains significant amounts of hydrogen sulfide, which leads to corrosion problems and the like.

There are a number of ways hydrogen sulfide can be removed from water, but many of these have significant disadvantages. For example, triazine can be added to water to remove hydrogen sulfide from the water. However, the high consumption of triazine that is necessary is costly and the overall reaction is relatively slow. Oxidants can be also be used to remove hydrogen sulfide from water, however, oxidants can form a solid product and can cause problems with corrosion. Caustic products can be used but they can result in high solids production. Zinc salts and chelates can be used. However, these have the disadvantages of producing solids and the process is reversible. Iron chelates can also be used, but they have the same disadvantages as zinc salts and chelates.

Thus, there is a need for an efficient and less costly method and system for removing hydrogen sulfide from water.

### SUMMARY OF THE INVENTION

In a first aspect, a method of removing hydrogen sulfide from sour water is provided, comprising providing water containing a first amount of hydrogen sulfide and having a first pH; adding a stripper gas to the water to form a mixture; agitating the mixture; and separating a gaseous portion from the mixture to form a water product, the water product containing a second amount of hydrogen sulfide that is less than the first amount of hydrogen sulfide.

In a second aspect, a system for removing hydrogen sulfide from sour water is provided comprising a feed inlet for supplying water containing a first amount of hydrogen sulfide and having a first pH; a stripper gas feed inlet for supplying stripper gas to the water; at least one mixer for mixing the water and the stripper gas; and at least one separator downstream from the at least one mixer for separating a gaseous portion from the mixture to produce water having a second amount of hydrogen sulfide that is less than the first amount of hydrogen sulfide.

Thus, in the present application a system and method for removing hydrogen sulfide from sour water is provided. Sour water containing hydrogen sulfide is combined with a stripping gas, for example, methane, carbon dioxide, or a combination of the two. In one embodiment, the pH of the sour water is lowered by the addition of an acid, for example, hydrochloric acid. The sour water is then passed through at least one mixer/separator combination, and, optionally, a series of two or more mixers/separators. When the sour water is vigorously mixed with the stripping gas in the mixer, the hydrogen sulfide separates from the water phase into the gaseous phase. Thus, when the mixed water is subsequently passed to an associated separator, the gas, which now includes a substantial amount of hydrogen sulfide gas, can be separated from the water.

After the gas is removed in the separator, the remaining water can be removed from the separator and, optionally, more stripping gas can be added to this water and then the water and stripping gas passed through the next mixer/separator in the series. The gas removed by each separator can be used for producing a final gas product, while the remaining water from each separator can be routed to the next mixer and separator in the series, if necessary. The water remaining in the last separator forms a water product with much, if not all, of the hydrogen sulfide having been removed.

### BRIEF DESCRIPTION OF THE DRAWINGS

Referring to the drawings wherein like reference numerals indicate similar parts throughout the several views, several aspects of the present invention are illustrated by way of example, and not by way of limitation, in detail in the figures, wherein:

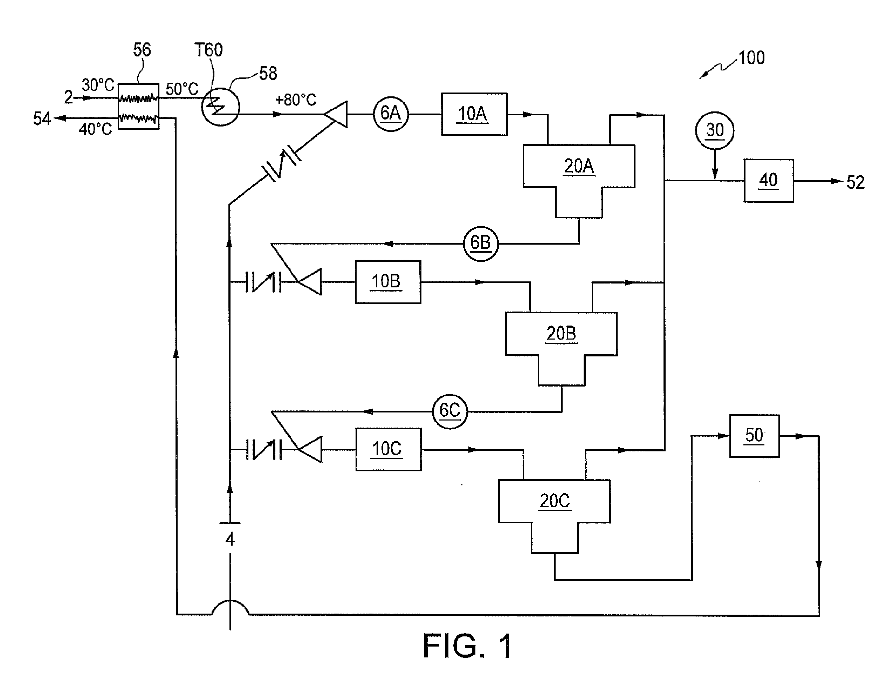

Fig. 1 is a process diagram of a system for removing hydrogen sulfide from water.

### DESCRIPTION OF VARIOUS EMBODIMENTS

The detailed description set forth below in connection with the appended drawing is intended as a description of various embodiments of the present invention and is not intended to represent the only embodiments contemplated by the inventor. The detailed description includes specific details for the purpose of providing a comprehensive understanding of the present invention. However, it will be apparent to those skilled in the art that the present invention may be practiced without these specific details.

Fig. 1 is a schematic illustration of a system 100 for removing hydrogen sulfide (H₂S) from water. The system 100 includes a feed inlet 2, a stripper gas feed inlet 4, a number of pH adjustment modules 6A, 6B, 6C for adding acid to the feed, a number of mixers 10A, 10B, 10C, a number of separators 20A, 20B, 20C, a triazine injection point 30, a gas compressor 40, a water polisher 50, a water product outlet 54 and a gas product outlet 52,

Sour water (water containing a first amount of hydrogen sulfide) is introduced into the system 100 through the feed inlet 2. The sour water can be from an industrial process such as a hydrocarbon upgrading process, natural source such as a well or any other suitable source of hydrogen sulfide containing water.

A stripper gas can be provided via stripper gas feed inlet 4 for supplying a stripper gas that will be mixed with the sour water. The stripper gas can be methane, CO₂ a mixture of methane and CO₂ steam, nitrogen, a mixture of any of these gases, etc.

A pH adjustment module 6A can also be provided to allow for the injection of an acid, such as hydrochloric acid, CO₂/carbonic acid, organic acids, such as formic acid, acetic acid, etc., into the sour water entering the system 100 through the feed inlet 2 and the stripper gas entering the system 100 through the stripper gas feed inlet 4. The pH adjustment module 6A and the acid injected into the sour water and stripper gas can be used to lower the pH of the sour water from a first pH to a desired lower second pH.

At neutral (∼7) to alkaline pH, hydrogen sulfide in water tends to dissolve and convert into hydrosulfide ions (HS⁻) and/or sulfide ions (S⁻). However, in water having a more acidic pH (< 7) the hydrosulfide ions tend to convert to hydrogen sulfide gas (H₂S). By using the pH adjustment module 6A to reduce the pH level of the sour water, some of the hydrosulfide ions present in the sour water will convert into the hydrogen sulfide gas (H₂S), which H₂S gas will then separate from the water phase into the gaseous phase.

In one embodiment, the pH adjustment module 6A can reduce the pH of the mixture of sour water and stripper gas to a pH in the range of 5 to 7.

The sour water from the feed inlet 2 may first pass through heat exchanger 56 where it can be preheated to about 50°C. The preheated sour water can be further heated in heater 58 to about 80°C, if desired. Stripping gas from the stripper gas feed inlet 4 can be fed to the heated (or non-heated, if heaters/heat exchangers are not used) and the sour water/stripping gas mixture can then be fed through a number of stages, where each stage has a mixer 10A, 10B, 10C and a corresponding separator 20A, 20B, 20C.

Each mixer 10A, 10B, 10C can be any type of mixer suitable for sufficiently agitating the mixture of water and stripping gas, however, in one aspect, the mixers 10A, 10B, 10C are static mixers. Static mixers are used for mixing two fluids and typically contain mixer elements or baffles that agitate the two fluids as they are passed through the static mixer. An example of a static mixer that can be used is Sulzer™ Mixer SMV, but other static mixers known in the art can also be used.

The mixture of sour water and stripper gas from the feed inlet 2 and the gas stripper feed inlet 4 can be routed through the first mixer 10A after the pH of the mixture has been adjusted by the pH adjustment module 6A. The first mixer 10A can mix the sour water and the stripping gas, dispersing the stripping gas in the sour water. Additionally, the agitation of the mixture can cause the dissolved hydrogen sulfide (H₂S) to move into the gas phase. The agitation of the sour gas and stripping gas can cause the hydrogen sulfide (H₂S) to break out of solution and transfer from the liquid phase into the gas phase of the stripping gas.

A first separator 20A can be paired with the first mixer 10A so that the water and hydrogen sulfide-containing gas can be routed to the first separator 20A after formation in the first mixer 10A. The first separator 20A can separate a gas portion from the water, with the gas portion containing stripping gas and gaseous hydrogen sulfide. This gas portion can be routed away to form the resulting gas product 52.

The water from the first separator 20A, while containing less hydrogen sulfide than the sour water being input into the system 100, can still contain some hydrogen sulfide dissolved in the water. This remaining water can be routed to a subsequent stage with a second mixer 10B and a second separator 20B to remove some of the hydrogen sulfide remaining in the water.

In one aspect, a pH adjustment module 6B can be used to lower the pH of the water before it is routed to the second mixer 10B.

The second mixer 10B can be used to mix water from the first separator 20A with stripper gas from the stripper gas feed inlet 4 and then the mixture can be routed to the second separator 20B to separate another gas portion from the water. Additional stripper gas can be added to the water before it passes through the second mixer 20B to replenish the stripper gas that was removed from the water in the first separator 20A. The additional gas portion separated from the water in the second separator 20B can be routed away to form the resulting gas product 52. This additional gas portion can comprise stripper gas removed from the water and gaseous hydrogen sulfide.

The water from the second separator can be routed through a last stage containing a third mixer 10C and a third separator 20C. Additional stripper gas from the stripper gas feed inlet 4 can be added to the water from the second separator 20B before the mixture of water and stripper gas is passed through the third mixer 10C to be agitated before being fed to the third separator 20C. A gas portion can be removed from the water in the third separator 20C and routed to form the resulting gas product 52. This gas portion can comprise stripper gas and hydrogen sulfide.

In one aspect, a pH adjustment module 6C can be used to lower the pH of the water before it is passed to the third mixer 10C.

From the third separator 20C, remaining water can be used to form the final water product containing significantly reduced levels of hydrogen sulfide (sweet water) in relation to the sour water that was input into the system 100.

Optionally, a water polisher 50, such as a water polisher that uses a chemical treatment, can be provided to improve the quality of the final water product 54. This may be useful where the water product 54 is intended to be used as a fracturing fluid or for other industries. For example, this chemical treatment can be acrolein, chlorine dioxide, chlorine, triazine, iron oxides (solid) or other suitable chemicals for treating the water.

Although Fig. 1 illustrates three stages of agitating and separating, where each stage has a mixer 10A, 10B, 10C and a corresponding separator 20A, 20B, 20C, more or fewer stages using mixers and separators could be used depending on the level of hydrogen sulfide in the sour water and/or the level of hydrogen sulfide that is acceptable in the final water product for a given purpose.

The gas portions obtained from the three separators 20A, 20B, 20C can be combined to form a gas product containing stripping gas removed from the water and gaseous hydrogen sulfide. This gas product can then be recycled, collected for storage, transported to another location in a gas line, etc. Optionally, the gas product obtained from the separators 20A, 20B, 20C can be "sweetened", i.e., the hydrogen sulfide removed, by further treatment with a chemical sweetener such as triazine, e.g., SCRLTB-IT™. An example is U.S. Patent No. 4,978,512, incorporated herein by reference. Other methods for sweetening sour gas can also be used.

The triazine injection point 30 can be used to inject triazine into the gas product to remove some of the hydrogen sulfide and then, optionally, passing the treated gas through a compressor 40 to form the final gas product 52. The final gas product 52 can be pipelined for further use. It is also understood that that the sour gas can be treated in other in-line injection systems, H₂S scrubber systems or chemical solvent systems.

In operation, system 100 can be used to remove hydrogen sulfide from water. Sour water can be input into the system at the feed inlet 2 where it can be combined with a stripper gas from the stripper gas feed inlet 4. The mixture of sour water and stripper gas can then have the pH adjusted, such as by the addition of an acid, to reduce the pH and decrease the amount of the hydrogen sulfide that is the form of hydrogen sulfide ions in the sour water.

The pH reduced mixture of sour water and stripping gas can be passed through a series of agitating and separating stages, where each stage agitates the mixture of the stripper gas and the water and then separates a gas portion from the water. In each stage, the mixture of water and stripping gas is passed through one of the mixers 10A, 10B, 10C to agitate the mixture before it is passed to the corresponding separator 20A, 20B, 20C, where a gas portion is removed from the water. The water removed from the separator 20A or 20B is then mixed with more stripping gas and passed through the subsequent mixer 10B or 10C, before it is passed to the corresponding separator 20B or 20C and an additional gas portion is separated from the water. When the water reaches the last separator 20C, the water remaining after another gas portion has been separated off, can form the final water product 54 which has a second amount of hydrogen sulfide which is less than the first amount of hydrogen sulfide in the sour water that was input into the system 100. In some cases, the water product 54 can contain little or no hydrogen sulfide in it (e.g., the water product 54 can be sweet water).

The water from the last separator 20C can also be further treated, such as by using a water polisher 50, to further increase the quality of the final water product 52.

The gas product obtained from the various separators 20A, 20B, 20C will typically contain stripping gas and gaseous hydrogen sulfide that has been removed from the water. These gas products can be combined to form a final gas product, however, in one aspect, the gas products collected from the separators 20A, 20B, 20C can be further treated to remove some or all of the hydrogen sulfide, such as by injecting triazine into the gas products, and thus improve the quality of the final gas product 52. The gas portions can also be passed through a gas compressor 40, such as when storage and/or transport of the gas products is desired without further treatment.

### Example 1

Samples of inlet water were subjected to four (4) separate stripping steps using methane as the stripping gas under varying conditions, namely, (i) 30°C (base case); (ii) 30°C and addition of 40m³/d HCl; (iii) 60°C and addition of 40m³/d HCl; (iv) 80°C and addition of 40m³/d HCl; and (v) 30°C and increasing stripping gas to 10 million standard cubic feet per day (MMSCFD) per stage. The amount of H₂S in both the water phases and gas phases was determined immediately prior to entering the first stripper and then after each of the four stripping steps. The amount of H₂S is given in kgmol/hr, as the unit is being operated on a continuous basis. Table 1 gives the results of the above five different conditions considered.

**Table 1**

| **Methane Stripping Gas** | | | | | | |
|---|---|---|---|---|---|---|
| | | 30°C Base Case | 30°C Add 40m3/d HCL | Temperature to 60°C with HCL | Temperature to 80°C with HCL | 30°C, Increase Stripping Gas to 10 MMSCFD per Stage |
| Inlet Sep Water H₂S | kgmol/hr | 1.969 | 1.293 | 0.837 | 0.505 | 1.293 |
| 1^{st} Stripper Water H₂S | kgmol/hr | 0.334 | 0.216 | 0.077 | 0.029 | 0.120 |
| 2^{nd} Stripper Water H₂S | kgmol/hr | 0.058 | 0.038 | 0.008 | 0.002 | 0.012 |
| 3^{rd} Stripper Water H₂S | kgmol/hr | 0.011 | 0.007 | 0.001 | 0.000 | 0.001 |
| 4^{th} Stripper Water H₂S | kgmol/hr | 0.002 | 0.001 | 0.000 | 0.000 | 0.000 |
| | | | | | | |
| Inlet Sep Gas Phase H₂S | kgmol/hr | 0.531 | 1.207 | 1.663 | 1.995 | 1.207 |
| 1^{st} Stripper Gas Phase H₂S | kgtnol/hr | 1.635 | 1.077 | 0.760 | 0.477 | 1.172 |
| 2^{nd} Stripper Gas Phase H₂S | kgmol/hr | 0.276 | 0.178 | 0.069 | 0.027 | 0.108 |
| 3^{rd} Stripper Gas Phase H₂S | kgmol/hr | 0.048 | 0.031 | 0.007 | 0.002 | 0.011 |
| 4^{th} Stripper Gas Phase H₂S | kgmol/hr | 0.008 | 0.006 | 0.001 | 0.000 | 0.001 |
| | | | | | | |
| HCL Rate | m³/d | 0 | 40 | 40 | 40 | 40 |
| Water Rate | m³/d | 15988 | 15899 | 15899 | 15899 | 15899 |
| Stripping Temp | °C | 30 | 30 | 60 | 79 | 30 |
| 1^{st} Stripper Gas Rate | MMSCFD | 5 | 5 | 5 | 5 | 10 |
| 2^{nd} Stripper Gas Rate | MMSCFD | 5 | 5 | 5 | 5 | 10 |
| 3^{rd} Stripper Gas Rate | MMSCFD | 5 | 5 | 5 | 5 | 10 |
| 4^{th} Stripper Gas Rate | MMSCFD | 5 | 5 | 5 | 5 | 10 |
| | | | | | | |
| Inlet Sep Pressure | kPa(a) | 96.5 | 96.5 | 96.5 | 96.5 | 96.5 |
| 1^{st} Stripper Pressure | kPa(a) | 96.5 | 96.5 | 96.5 | 96.5 | 96.5 |
| 2^{nd} Stripper Pressure | kPa(a) | 96.5 | 96.5 | 96.5 | 96.5 | 96.5 |
| 3^{rd} Stripper Pressure | kPa(a) | 96.5 | 96.5 | 96.5 | 96.5 | 96.5 |
| 4^{th} Stripper Pressure | kPa(a) | 96.5 | 96.5 | 96.5 | 96.5 | 96.5 |

It can be seen from the results presented in Table 1 that, even in the base case where approximately 79% of the total H₂S of the inlet feed is in the water phase, a significant amount of H₂S is stripped from the inlet water by using methane as the stripping gas and at least one stripper (i.e., after the first stripper, the first stripper water only contains approximately 13% of the original H₂S present in the inlet feed (water/gas phases). Further, it can be seen that, as the temperature of the inlet water increases and the pH decreases with the addition of HCI, less of the total H₂S of the inlet feed is initially present in the inlet water and therefore an even more significant amount of H₂S is removed from the inlet water in the first stripping step.

For example, when 40 m³/d HCI is added to the inlet feed and the inlet feed is then subjected to the first stripping stage, the first stripper water now only contains approximately 8.6% of the original H₂S present in the feed. When 40 m³/d of HCI is added to the inlet feed and the temperature is raised to 80°C, the amount of H2S present in the water after the first stripper is reduced to approximately 1%. Thus, by using higher temperatures and lower pH, essentially all of the H₂S can be stripped from the water after only two stripper stages.

Finally, it can be seen from Table 1 that increasing the amount of stripping gas used from 5MMSCFD to 10 MMSCFD resulted in the first stripper water containing less than 5% of the original H₂S present in the inlet feed. This is a significant improvement from the base case where the first stripper water still contained approximately 13% of the original H₂S present in the feed.

The previous description of the disclosed embodiments is provided to enable any person skilled in the art to make or use the present invention. Various modifications to those embodiments will be readily apparent to those skilled in the art, and the generic principles defined herein may be applied to other embodiments without departing from the spirit or scope of the invention. Thus, the present invention is not intended to be limited to the embodiments shown herein, but is to be accorded the full scope consistent with the claims, wherein reference to an element in the singular, such as by use of the particle "a" or "an" is not intended to mean "one and only one" unless specifically so stated, but rather "one or more". All structural and functional equivalents to the elements of the various embodiments described throughout the disclosure that are known or later come to be known to those of ordinary skill in the art are intended to be encompassed by the elements of the claims. Moreover, nothing disclosed herein is intended to be dedicated to the public regardless of whether such disclosure is explicitly recited in the claims.

## Claims

1. A method of removing hydrogen sulfide from sour water, comprising:
providing water containing a first amount of hydrogen sulfide and having a first pH;
adding a stripper gas to the water to form a mixture;
agitating the mixture; and
separating a gaseous portion from the mixture to form a water product, the water product containing a second amount of hydrogen sulfide that is less than the first amount of hydrogen sulfide.

2. The method of claim 1 further comprising lowering the first pH of the mixture to a second pH before agitating the mixture.

3. The method of claim 1 wherein the stripper gas is selected from the group consisting of natural gas, methane, steam, nitrogen, carbon dioxide or combinations thereof.

4. The method of claim 1 wherein the mixture is agitated using a mixer.

5. The method of claim 4 wherein the mixer is a static mixer.

6. The method of claim 1 wherein the gaseous portion comprises stripper gas and hydrogen sulfide.

7. The method of claim 6 wherein the gaseous portion is further treated to remove the hydrogen sulfide.

8. The method of claim 7 wherein the gaseous portion is treated with triazine.

9. The method of claim 1 wherein the water product is further treated by passing it through a water polisher.

10. The method of claim 1 wherein the pH level is lowered by adding an acid.

11. The method of claim 1 wherein the mixture is agitated by passing the mixture through at least one mixer and the gaseous portion is separated from the mixture using at least one separator.

12. The method of claim 11 wherein agitating the mixture and separating the portion of gas is performed in a plurality of stages, and wherein each stage comprises: a mixer and a separator, and wherein in each subsequent stage after a first stage, water from a separator in a previous stage is passed through the mixer and separator of the subsequent stage and wherein water from a separator in the last stage is used to form the water product.

13. The method of claim 11 wherein the plurality of mixers are static mixers.

14. The method of claim 11 further comprising:
passing the mixture through a first mixer and then to a first separator;
removing gas from the mixture using the separator;
adding stripping gas to the water from the first separator and passing the water and stripping gas through a second mixer to a second separator;
for each subsequent mixer and subsequent separator, adding stripping gas to water from a previous separator, and passing the water and stripping gas through the subsequent mixer and subsequent separator to remove gas from the water in the subsequent separator; and
for the last separator, using the water from the last separator to form the final water product.

15. A system for removing hydrogen sulfide from sour water, comprising:
a feed inlet for supplying water containing a first amount of hydrogen sulfide and having a first pH;
a stripper gas feed inlet for supplying stripper gas to the water;
at least one mixer for mixing the water and the stripper gas; and
at least one separator downstream from the at least one mixer for separating a gaseous portion from the mixture to produce water having a second amount of hydrogen sulfide that is less than the first amount of hydrogen sulfide.

16. The system of claim 15, further comprising a pH adjustment module for adjusting the pH of the water from the feed inlet prior to or during the mixing of the water and the stripper gas in the mixer.

17. The system of claim 15 further comprising a triazine injection point for injecting triazine into the gas portion collected from the at least one separator.

18. The system of claim 15 further comprising a water polisher for further treating the water obtained from the at least one separator.
